# EUROPEAN PATENT SPECIFICATION

(11) **EP 2 633 969 B1**
(45) Date of publication and mention of the grant of the patent: **18.12.2019**
(21) Application number: 13156338.9
(22) Date of filing: 22.02.2013
(51) Int. Cl.: B29C 45/17, B29C 45/76, B29C 45/77, B29C 45/82

(54) **Injection molding machine**
Spritzgießmaschine
Machine de moulage à injection

(30) Priority: 02.03.2012 JP 2012046665
(43) Date of publication of application: 04.09.2013
(73) Proprietor: SUMITOMO HEAVY INDUSTRIES, LTD., Tokyo 141-6025 (JP)
(72) Inventor: Amano, Mitsuaki, Chiba, 263-0001 (JP); Sato, Hiroshi, Chiba, 263-0001 (JP)
(74) Representative: Hoffmann Eitle

(56) References cited:
- WO-A1-95/30529
- JP-A- H0 542 572
- JP-A- H03 118 126
- JP-A- 2000 071 287
- JP-A- 2000 238 110
- JP-A- 2006 062 244
- US-B1- 6 432 333

## Description

### TECHNICAL FIELD

The present invention relates to an injection molding machine.

### BACKGROUND ART

An injection molding machine is provided with an injection apparatus to inject a melted resin into a mold apparatus. The mold apparatus includes a stationary mold and a movable mold. A cavity space is formed between the stationary mold and the movable mold when closing the mold apparatus is closed. The injection apparatus injects a resin melted in a heating cylinder from a nozzle so as to fill the melted resin in the cavity space in the mold apparatus. After mold opening, the resin cooled and solidified in the cavity space is taken out as a mold product.

When causing the resin injected from the nozzle to flow into the mold apparatus, a pressure is acted on the resin. The nozzle is pressed against the mold apparatus prior to starting the injection of resin so that the resin does not leak between the nozzle and the mold apparatus due to the pressure of the resin (for example, refer to Japanese Laid-Open Patent Application No. 2006-62245).

Although various detectors are attached to an injection machine in order to acquire information regarding injection molding, detection results of the detectors have not been practically used.

JP 2000 071287 A discloses an injection molding machine having the features a), b) of claim 1 and showing the steps a), b) of claim 6.

JP 2006 062244 A discloses an injection molding machine capable of controlling the nozzle touch pressure with high precision and high response by a simple constitution using a hydraulic actuator, and a nozzle touch method. This document also discloses features a), b) of claim 1 and claim 6, respectively.

JP 2000 238110 A also discloses an injection molding machine which detects the nozzle touch pressure by detecting the internal pressure of a transfer cylinder of a moving mechanism.

JP H05 42572 A also discloses an injection molding machine in which the injection pressure, dwelling, back pressure and nozzle touch pressure can be detected by means of one detector.

WO 95/30529 A1 discloses a process and device for controlling the application of a nozzle in an electric injection molding machine. A control circuit provides constant balance between application force and opening force from the pressure with a selectable pre-stress.

JP H03 118126 A discloses an injection molding machine which can produce a suitable nozzle touching force in accordance with molding conditions by calculating a nozzle touching force suitable for molding from an actually measured resin pressure and the set cross-sectional area of the top port of a nozzle.

US 6 432 333 B1 discloses an injection apparatus in which an injection nozzle is driven against a mold with a driving apparatus. A spring is positioned between the driving apparatus and a frame and a deformation of the spring is sensed.

JP 2000 - 167875A discloses a nozzle touch off method for an injection device of an injection molding machine, a drive source for nozzle touching at the injection device is constituted of a screw mechanism and a servo motor for nozzle touching.

JP H8 - 318545Adiscloses an injection device which retreats to a predetermined retreat position. The set retreat position stored in a controller coincides with the actual retreat position outputted from a position detector and the switching device to which a command signal is outputted from the controller opens a power circuit to cut off the power to an electromotor.

As explained above although various detectors are already attached to an injection molding machine, some of the detection results have not been sufficiently used for injection molding.

Therefore, the object of the present invention is to provide an injection molding machine that can inquire information useful for an injection molding. The object is also to provide a corresponding injection molding method.

This object is solved by an injection molding machine according to claim 1 and an injection molding method according to claim 6.

### SUMMARY OF THE INVENTION

In order to achieve the above-mentioned object, there is provided according to the present invention an injection molding machine comprising: an injection apparatus including a nozzle to inject a resin to fill the resin into a mold; a moving mechanism configured to press said nozzle against said mold to generate a nozzle contact force; and a detection part configured to detect a resin pressure in said mold by detecting a change in the nozzle contact force due to rising of an injection pressure of said resin.

There is provided according to another aspect of the present invention an injection molding method comprising: moving an injection apparatus to press a nozzle against a mold to generate a nozzle contact force; injecting a resin from said nozzle into said mold; and detecting a resin pressure in said mold by detecting a change in the nozzle contact force due to rising of an injection pressure of said resin.

According to the present invention, an injection molding machine and method that can acquire information useful for injection molding is provided.

### BRIEF DESCRIPTION OF DRAWINGS

FIG. 1 is a diagram illustrating an outline of an injection molding machine according to an embodiment of the present invention.
FIG. 2 is a diagram illustrating a structure of an injection apparatus according to an embodiment.
FIG. 3 illustrates graphs indicating changes in various kinds of parameters, which indicate statuses of the injection molding machine according to the embodiment with respect to time.
FIG. 4 is a diagram illustrating a structure of an injection molding machine according to a variation of the present invention.

### DESCRIPTION OF EMBODIMENTS

A description will be given below, with reference to the drawings, of an embodiment of the present invention. In each drawing, parts that are the same or corresponding to parts illustrated in another drawing are given the same reference numerals and duplicate descriptions thereof will be omitted. Additionally, the description is based on the assumption that a direction of causing an injection apparatus to move closer to a stationary mold before starting injection of a resin is a forward direction and a direction of causing the injection apparatus to separate from the stationary mold after completing pressure-holding of a resin is a rearward direction.

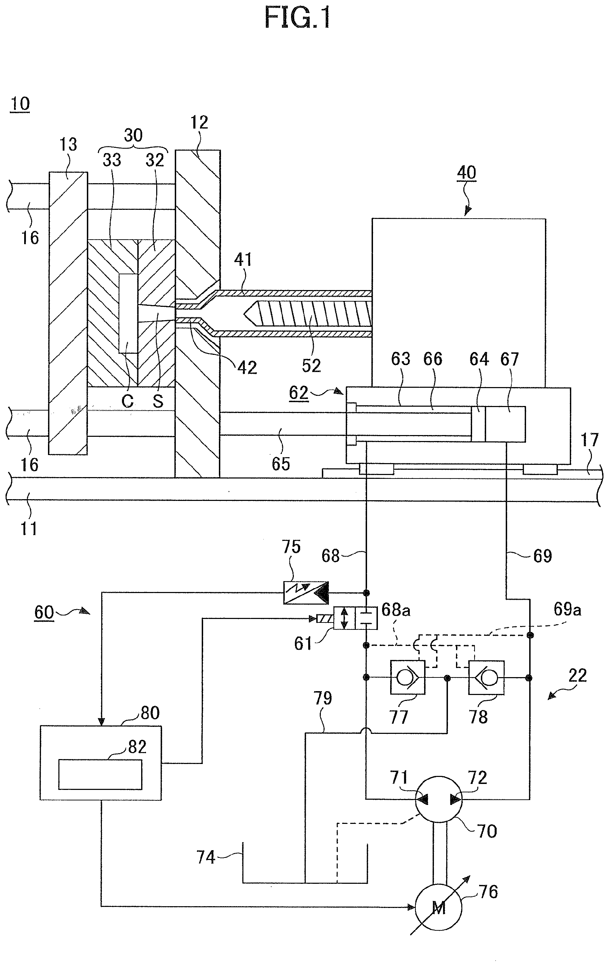

FIG. 1 is a diagram illustrating an outline of an injection molding machine according to an embodiment of the present invention. FIG. 1 illustrates a state of mold-clamping.

The injection molding machine 10 is equipped with a frame 11, a stationary platen 12 fixed to the frame 11, and a plurality of tie bars 16 (for example, 4 pieces) extending from the stationary platen 12. The injection molding machine 10 is further equipped with a movable platen 13, which is arranged to face the stationary platen 12 and movable along the tie bars 16 (movable in left and right directions in the figure). A movable mold 33 is attached to an opposed surface of the movable platen 13, which opposed surface faces the stationary platen 12. A stationary mold 32 is attached to an opposed surface of the stationary platen 12, which opposed surface faces the movable platen 13. A mold apparatus 30 is constituted by the stationary mold 32 and the movable mold 33. Mold-closing, mold-clamping and mold-opening are performed by moving the movable platen 13 close to or away from the stationary platen 12. A cavity space C is formed between the movable mold 33 and the stationary mold 32 in a mold-clamping state.

The injection molding machine 10 is further equipped with an injection machine 40, which injects a resin melted in a heating cylinder 41 from a nozzle 42 to fill the melted resin in the cavity space C in the mold apparatus 30. The resin is solidified in the cavity space C, and the solidified resin as a mold product is taken out of the mold apparatus 30 after mold-opening. A pressure is exerted on the resin when the resin injected from the nozzle 42 is supplied into the mold apparatus 30. In order to prevent the resin leaking from a contact portion between the nozzle 42 and the mold apparatus 30, an injection apparatus moving apparatus (moving mechanism) 60 is provided to the injection molding machine 10. The injection apparatus moving apparatus 60 moves the injection apparatus 40 relative to the mold apparatus 30 to press the nozzle 42 of the injection apparatus 40 against the mold apparatus 30. The injection apparatus 40 is movable forward and rearward along a guide 17 fixed on a frame 11 of the injection molding machine 10.

The injection molding machine 10 is further equipped with a control apparatus 80, which controls various operations of the injection molding machine 10. The control apparatus 80 includes a microcomputer or the like, which includes a CPU, a ROM for storing control programs, etc., a RAM for storing results of computation, etc., a timer, a counter., an input interface and an output interface, etc.

### (Injection Apparatus)

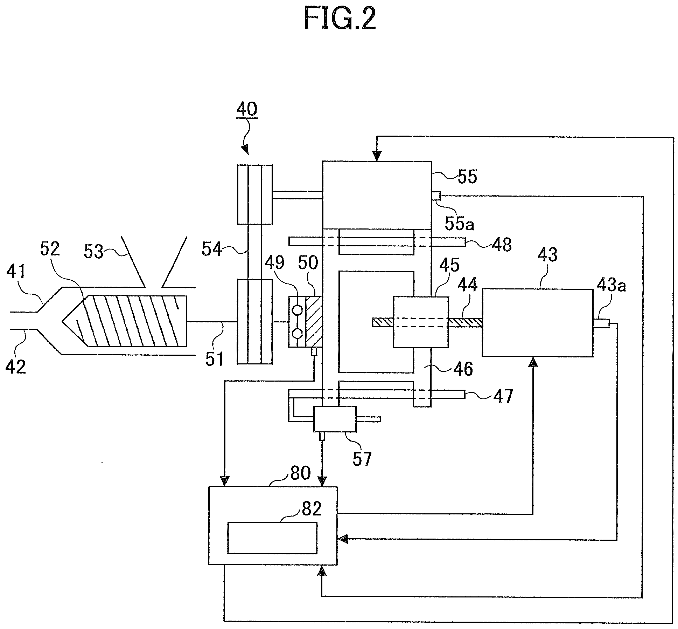

FIG. 2 is a diagram illustrating a structure of the injection apparatus according to an embodiment of the present invention.

The injection apparatus 40 is equipped with an injection motor 43. Rotation of the injection motor 43 is transmitted to a ball-screw shaft 44. A ball-screw nut 45, which moves forward and rearward according to the rotation of the ball-screw shaft 44, is fixed to a pressure plate 46. The pressure plate 46 is movable along guide bars 47 and 48 fixed to a base frame (not illustrated in the figure). The forward and rearward movement of the pressure plate 46 is transmitted to a screw 52 through a bearing 49, a load cell 50, and an injection shaft 51.
The screw 52 is arranged rotationally and movably in an axis direction in a heating cylinder 41. A hopper 53 for resin supply is provided to a rear portion of the heating cylinder 41. A rotational motion of a metering motor 55 is transmitted to the injection shaft 51 through a coupling member 54 such as a belt being engaged with pulleys. That is, the screw 52 is rotated by the injection shaft 51 being rotated by the metering motor 55.

In a metering process, a melted resin is fed to and stored in a space in front of the screw 52 by the screw 52 being rotated in the heating cylinder 41.
Thereby, the screw 52 is moved rearward. In an injection process (may be referred to as a filling process), the screw 52 is moved forward to press the melted resin to cause the resin to be injected from the nozzle 42. The melted resin is pushed into the cavity space C formed between the stationary mold 32 and the movable platen 33 through a spool S formed in the stationary mold 32. A force to press the melted resin is detected by the load cell 50 as a reaction force. That is, an injection pressure of the resin from the nozzle 42 is detected. The detected injection pressure is input to the control apparatus 80. Because the melted resin in the cavity space C thermally contracts due to cooling, an amount of resin corresponding to the thermal contraction is replenished in a pressure-holding process so that the injection pressure of the resin is maintained at a predetermined pressure.

A position detector 57 for detecting an amount of movement of the screw 52 is attached to the pressure plate 46. A detection signal of the position detector 57 is input to the control apparatus 80. The detection signal of the position detector 57 may be used to detect a moving speed of the screw 52.

The injection motor 43 and the metering motor 55 may be servo motors, respectively, and may be equipped with encoded 43a and 55a, respectively, for detecting a number of revolutions. Numbers of revolutions detected by the encoders 43a and 55a are input to the control apparatus 80. The control apparatus 80 feedback-controls the injection motor 43 and the metering motor 55 based on results of detection of the encoders 43a and 55a.

### (Injection Apparatus Moving Apparatus)

The injection apparatus moving apparatus 60 includes, as illustrated in FIG. 1, a hydraulic cylinder 62 and a reversible hydraulic pump 70 as a hydraulic-pressure source which generates a hydraulic pressure. The hydraulic pump 70 is driven by a pump motor 76. The pump motor 76 may be a servo motor. The rotating direction of the pump motor 76 is controlled by the control apparatus 80.

The hydraulic cylinder 62 is constituted by, for example, a cylinder body 63, a piston 64 reciprocally movable in the cylinder body 63, and a cylinder rod 65 connected to the piston 64 and retractably protrudes from the cylinder body 63. A front end of the cylinder rod 65 is fixed to the stationary platen 12. The cylinder body 63 is fixed to the injection apparatus.

The hydraulic cylinder 62 includes a front chamber 66 as a first chamber and a rear chamber 67 as a second chamber, which are comparted by the piston 64. Because the cylinder rod 65 extends through the front chamber 66, the cross-sectional area of the front chamber 66 is smaller than the cross-sectional area of the rear chamber 67.

The hydraulic pump 70 has a first suction and discharge port 71 and a second suction and discharge port 72. The first suction and discharge port 71 is connected to the front chamber 66 of the hydraulic cylinder 62 through a first flow path 68. The second suction and discharge port 72 is connected to the rear chamber 67 of the hydraulic cylinder 62 through a second flow path 69.

The hydraulic pump 70 is capable of generating a hydraulic pressure by suctioning an operating fluid from one of the first suction and discharge port 71 and the second suction and discharge port 72 and discharging the operating fluid from the other of the first suction and discharge port 71 and the second suction and discharge port 72 while changing a rotating direction of the pump motor 76. The hydraulic pump 70 is also capable of suctioning an operating fluid from a tank 74 and discharging the operating fluid from one of the first suction and discharge port 71 and the second suction and discharge port 72.

When the operating fluid pressurized by the hydraulic pump 70 is discharged from the first suction and discharge port 71 and is supplied to the front chamber 66 of the hydraulic cylinder 62 through the first flow path 68, the cylinder body 63 moves forward and the injection apparatus 40 moves forward towards the stationary mold 32. On the other hand, when the operating fluid pressurized by the hydraulic pump 70 is discharged from the second suction and discharge port 72 and is supplied to the rear chamber 67 of the hydraulic cylinder 62 through the second flow path 69, the cylinder body 63 moves rearward and the injection apparatus 40 moves rearward to be distant from the stationary mold 32.

A pressure sensor 75, which detects a hydraulic pressure of the operating fluid, is provided in the middle of the first flow path 68 connected to the front chamber 66 of the hydraulic cylinder 62. The pressure sensor 75 transmits a detection signal to the control apparatus 80. The hydraulic pressure detected by the pressure sensor 75 is almost equal to the hydraulic pressure inside the front chamber 66 of the hydraulic cylinder 62. The pressure sensor 75 is provided at a position closer to the front chamber 66 than an open/close valve 61 provided in the middle of the first flow path 68.

When moving the injection apparatus 40 forward, the control apparatus 80 causes the pump motor 76 to normally rotate. Then, the hydraulic pump 70 is rotated normally, and the operating fluid is discharged from the first suction and discharge port 71. The operating fluid is supplied to the front chamber 66 of the hydraulic cylinder 62 through the open/close valve 61, which is in an open state. Because the front chamber 66 is expanded and the rear chamber 67 is reduced, the cylinder body 63 moves forward and the injection apparatus 40 moves forward. Then, the nozzle 42 of the injection apparatus 40 is brought into contact with a spool bush of the stationary mold 32, thereby achieving a nozzle contact. Then, the operating fluid is supplied to the front chamber 66 of the hydraulic cylinder 62, which results in an increase in a nozzle contact force with which force the nozzle 42 is pressed against the stationary mold 32. When the hydraulic pressure in the front chamber 66 reaches a set value and the nozzle contact force reaches a set value, the open/close valve 61 is closed. Thereby, the hydraulic pressure in the front chamber 66 is maintained at the set value even after the drive of the pump motor 76 is stopped, and the nozzle contact force is maintained at the set value. The nozzle contact force is detected by the pressure sensor 75 and supplied to the control apparatus 80.

When moving the injection apparatus rearward, the open/close valve 61 is opened and the control apparatus 80 causes the pump motor 76 to reversely rotate. Thus, the hydraulic pump 70 rotates reversely, and the operating fluid is discharged from the second suction and discharge port 72 and is supplied to the rear chamber 67 of the hydraulic cylinder 62 through the second flow path 69. Because the rear chamber 67 is expanded and the front chamber 66 is reduced, the cylinder body 63 moves rearward and the injection apparatus 40 moved rearward.

In the present embodiment, check valves 77 and 78 are provided between the first flow path 68 and the second flow path 69, and a portion between the check valves 77 and 78 is connected to the tank 74 by a drain passage 79. The check valves 77 and 78 and the drain passage 79 form a drain circuit for adjusting an excess and deficiency of an amount of circulation of the operating fluid due to a difference in volume between the front chamber 66 and the rear chamber 67 of the hydraulic cylinder 62. For example, when moving the cylinder body 63 forward, a certain amount of operating fluid is supplied from the first flow path 68 to the front chamber 66 and a certain amount of operating fluid is discharged from the rear chamber 67. In the present embodiment, because the cross-sectional area of the rear chamber 67 is larger than the cross-sectional area of the front chamber 66, an amount of operating fluid discharged from the rear chamber 67 is larger than an amount of operating fluid supplied to the front chamber 66. If the operating fluid is continuously supplied from the hydraulic pump 70 to the first flow path 68 to cause the cylinder body 63 to move forward, a hydraulic pressure in the first flow path 68 becomes high, which results in the operating fluid in the first flow path 68 to flow to a branch path 68a of the first flow path 68, thereby causing the check valve 78 of the second flow path 69 to open. Then, when the check valve 78 is opened, the operating fluid discharged form the rear chamber 67 is returned to the tank 74 by being caused to flow through the check valve 78 and the drain passage 79. Accordingly, an excess and deficiency in an amount of operating fluid in the first flow path 68 and the second flow path 69 can be adjusted. It should be noted that the check valve 77 is open when a hydraulic pressure of the operating fluid in a branch path 69a of the second flow path 69 becomes high.

With the above-mentioned injection apparatus moving apparatus 60, the high-pressure operating fluid of the front chamber 66 or the rear chamber 67 of the hydraulic cylinder 62 is suctioned by the hydraulic pump 70, and, then, discharged by the hydraulic pump 70. In this case, only an excessive amount of the operating fluid is returned to the tank 74.

With the above-mentioned injection apparatus moving apparatus 60, because the cross-sectional area of the rear chamber 67 is larger than the cross-sectional area of the front chamber 66, when moving the cylinder body 63 rearward, an amount of the operating fluid discharged from the front chamber 66 is smaller than an amount of the operating fluid supplied to the rear chamber 67. Thus, the operating fluid discharged from the front chamber 66 can be supplied to the rear chamber 67 of the hydraulic cylinder 62 through the hydraulic pump 70 without depressurizing (without returning to the tank 74). Accordingly, when starting the rearward movement of the cylinder body 63, there is no need to wait for return of the operating fluid from the front chamber 66 to the tank 74, and the rearward movement can be started immediately after a forward movement, thereby reducing a molding cycle. It should be noted that there may be a waiting time because mold-closing, mold-clamping and mold-opening are performed during a period from a completion of a rearward movement to a start of a subsequent forward movement.

Moreover, with the above-mentioned injection apparatus moving apparatus 60, because the operating fluid of the front camber 66 and the rear chamber 67 of the hydraulic cylinder 62 is merely circulated via the hydraulic pump 70, the suction pressure of the hydraulic pump 70 is equal to the hydraulic pressure in the hydraulic cylinder 62, which is higher than an atmospheric pressure. Thus, the compression ratio of the hydraulic pump 70 is reduced, which results in an efficient operation of the hydraulic pump 70. Moreover, there is no need to return the hydraulic pressure of the operating fluid to an atmospheric pressure and, thereafter, pressurize the operating fluid again. Thus, heat generation in the operating fluid is suppressed, thereby suppressing degradation of the operating fluid.

### (Change with Time in Various Parameters Indicating State of the Injection molding Machine)

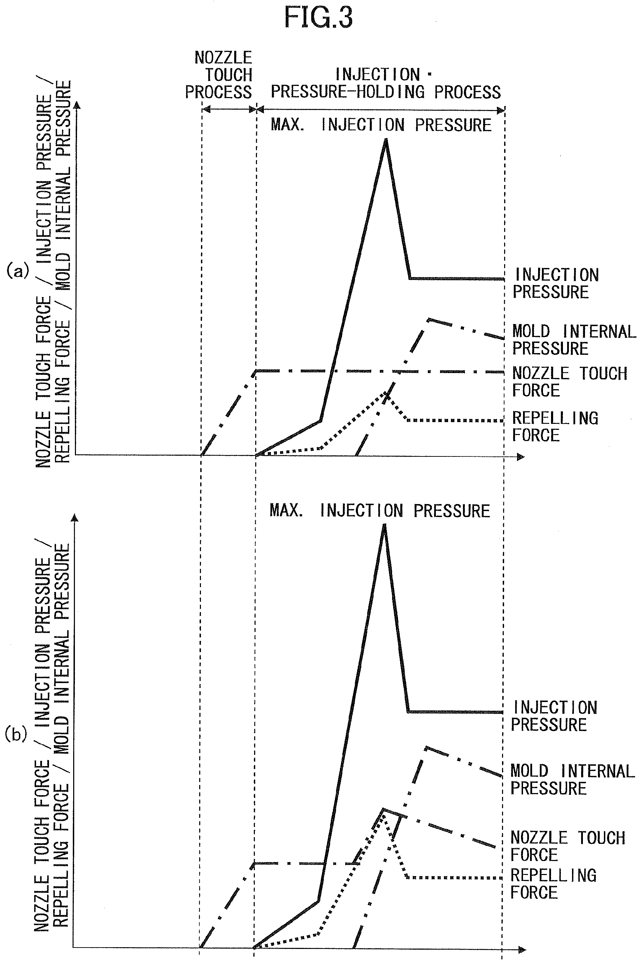

FIG. 3 illustrates graphs indicating changes in various parameters indicating a state of the injection molding machine with respect to passage of time in a nozzle contact process and an injection/pressure-holding process. In FIG. 3, the horizontal axis represents a time, and the vertical axis represents a nozzle contact force (a force to press the nozzle forward), an injection pressure of a resin injected from the nozzle, a reaction force which a resin injected from the nozzle thrusts back the nozzle, and a resin pressure (mold internal force) in the cavity space in the mold apparatus. FIG. 3-(a) is a graph when the nozzle contact force at a time of initiating the injection/pressure-holding process is higher than the maximum reaction force during the injection/pressure-holding process. FIG. 3-(b) is a graph when the nozzle contact force at a time of initiating the injection/pressure-holding process is lower than the maximum reaction force during the injection/pressure-holding process.

The nozzle contact process is performed after mold-clamping. In the nozzle contact process, the control apparatus 80 causes the pump motor 76 to rotate normally. Thus, the hydraulic pump 70 is rotated normally, and the operating fluid is discharged from the first suction and discharge port 71. The operating fluid is supplied to the front chamber 66 of the hydraulic cylinder 62 through the open/close valve 61, which is in an open state. Because the front chamber 66 is expanded and the rear chamber 67 is reduced, the cylinder body 63 moves forward and the injection apparatus 40 moves forward. Then, the nozzle 42 of the injection apparatus 40 is brought into contact with a spool bush of the stationary mold 32, thereby achieving a nozzle contact. Then, the operating fluid is supplied to the front chamber 66 of the hydraulic cylinder 62, which results in an increase in a nozzle contact force with which force the nozzle 42 is pressed against the stationary mold 32. When the hydraulic pressure in the front chamber 66 reaches a set value and the nozzle contact force reaches a set value, the open/close valve 61 is closed. Thereby, the hydraulic pressure in the front chamber 66 is maintained at the set value even after the drive of the pump motor 76 is stopped, and the nozzle contact force is maintained at the set value. The nozzle contact force is detected by the pressure sensor 75 and supplied to the control apparatus 80.

Then, in the injection/pressure-holding process, the control apparatus 80 drives the injection motor 43. The screw 52 moves forward and pushes a melted resin to inject from the nozzle 42. The melted resin is pushed into the cavity space C formed between the stationary mold 32 and the movable mold 33 through a spool S or the like formed in the stationary mold 32. When the melted resin begins to be filled in the cavity space C, the mold cavity pressure is raised. After completion of filling of the melted resin, the melted resin in the cavity space C is thermally contracted due to cooling. Thus, in order to replenish a resin corresponding to the thermal contraction, the injection pressure of the resin is maintained at a predetermined pressure. An operation of the screw 52 is controlled based on a velocity control in the injection process and, on the other hand, an operation of the screw 52 is controlled based on a pressure control in the pressure-holding process.

In the injection/pressure-holding process, an injection pressure of the resin injected from the nozzle 42 is detected by the load cell 50. The reaction force increases as the injection pressure increases so that the injection pressure and the reaction force are in proportion. Normally, as illustrated in FIG. 3-(a), the nozzle contact pressure at a start time of the injection/pressure-holding process is set higher than the maximum reaction force during the injection/pressure-holding process. In this case, the nozzle contact force does not change during the injection/pressure-holding process.

On the other hand, as illustrated in FIG. 3-(b), if the nozzle contact force (that is, the set value of the nozzle contact force) at a start time of the injection/pressure-holding process is lower than the maximum reaction force during the injection/pressure-holding process, the nozzle 42 is thrust back slightly during the injection/pressure-holding process and the injection apparatus 40 moves rearward. Thus, the front chamber 66 of the hydraulic cylinder 62 is reduced, which causes the hydraulic pressure in the front chamber 66 to increase and results in a detection value of the nozzle contact force being higher than a set value. Such a change in the detection value of the nozzle contact force indicates that the maximum reaction force is too high, that is, the maximum injection pressure is too high, which represents that the resin pressure in the mold apparatus 30 (the spool S, the cavity space C, etc.) is too high.

Thus, in the present embodiment, a detection part 82 is included in the control apparatus 80, the detection part 82 detecting a resin pressure in the mold apparatus 30 by detecting a change in the nozzle contact force due to an increase in the injection pressure. Presence or absence of a change in the nozzle contact force is detected based on, for example, a result of detection of the pressure sensor 75. As mentioned later in detail, useful information in an injection molding can be obtained by detecting a resin pressure in the mold apparatus 30. It should be noted that, normally, to be on the safe side, the set value of the nozzle contact force is set to a value slightly higher, and, thus, the detection value of the nozzle contact force does not fluctuate during the injection/pressure-holding process.

The detection part 82 may judge whether to reduce the set value of the nozzle contact force based on the results of detection. For example, the detection part 82 judges that, when there is no change in the detection value of the nozzle contact force due to an increase in the injection pressure during the injection/pressure-holding process, the rising pressure in the spool S in the mold apparatus 30 is low and the set value of the nozzle contact force can be reduced. If it is judged that the set value of the nozzle contact force can be reduced, the control apparatus 80 reduces the set value of the nozzle contact force in the subsequent molding cycle. The control apparatus 80 repeats this operation so as to stepwisely reduce the set value of the nozzle contact force. The minimum set value of the nozzle contact force, when there is no change in the detection value of the nozzle contact force, is adopted as a final set value and is used in the nozzle contact process thereafter. Thereby, a force exerted on the stationary platen 12 from the cylinder rod 65 is reduced and an inclination of the stationary platen 12 is suppressed, which results in good parallelism between the stationary mold 32 and the movable mold 33.

Moreover, the detection part 82 may judge whether to increase the set value of the nozzle contact force based on the results of detection. For example, when there is a change in the detection value of the nozzle contact force due to rising of the injection pressure during the injection/pressure-holding process, the detection part 82 judges that it is necessary to increase the set value of the nozzle contact force because the resin pressure in the spool S in the mold apparatus 30 is high. If it is judged that an increase in the set value of the nozzle contact force is necessary, the control apparatus 80 increases the set value of the nozzle contact force in a subsequent molding cycle. Thereby, the nozzle 42 is prevented from being thrust back during the injection/pressure-holding process so that the resin is prevented from being leaked between the nozzle 42 and the stationary mold 32. The control apparatus 80 repeats this operation so as to stepwisely increase the set value of the nozzle contact force until a change in the detection value of the nozzle contact force due to rising in the injection pressure during the injection/pressure-holding process varnishes.

Moreover, the detection part 82 may judge whether to reduce the maximum injection pressure during the injection/pressure-holding process. For example, when there is a change in the detection value of the nozzle contact force due to rising of the injection pressure during the injection/pressure-holding process, the detection part 82 determines that the resin pressure in the spool S in the mold apparatus 30 is too high and it is necessary to reduce the maximum injection pressure. It should be noted that the detection part 82 may make a determination in consideration of flow property of the resin in addition to the results of detection. If it is judged that a decrease in the maximum injection pressure is necessary, the control apparatus 80 reduces the maximum injection pressure in a subsequent time of the injection/pressure-holding process. The increase of the maximum injection pressure is performed according to a rearward shift of a V/P changeover position of the screw 52 (a position at which the control of the screw 52 is changed from a velocity control to a pressure control), a decrease in a forward moving speed of the screw, etc. Thereby, the nozzle 42 can be prevented from being thrust back during the injection/pressure-holding process, which can prevent the resin from being leaked between the nozzle 42 and the stationary mold 32. The control apparatus 80 repeats this operation so as to stepwisely reduce the maximum injection pressure until a change in the detection value of the nozzle contact force due to rising of the injection pressure during the injection/pressure-holding process varnishes. On the other hand, if there is no change in the detection value of the nozzle contact force due to rising of the injection pressure during the injection/pressure-holding process, the detection part 82 determines that the resin pressure in the spool S in the mold apparatus 30 is proper and there is no need to reduce the maximum injection pressure because there is no leakage of the resin between the nozzle 42 and the stationary mold 32.

Furthermore, the detection part 82 may judge whether or not the mold product is good based on the results of detection. For example, when there is a change in the detection value of the nozzle contact force due to rising of the injection pressure during the injection/pressure-holding process, the detection part 82 determines that a quality of the mold product is not good because the resin pressure in the cavity space C in the mold apparatus 30 is too high and it is possible that the mold apparatus 30 is forcibly opened and burrs are generated. The mold product of which quality is determined as not good is subjected to a precision inspection by an inspection apparatus, and is subjected to a further determination as to whether the mold product is good or bad. On the other hand, when there is no change in the detection value of the nozzle contact force due to rising of the injection pressure during the injection/pressure-holding process, the detection part 82 determines that the quality of the mold product is good because the resin pressure in the cavity space C in the mold apparatus 30 is proper and no burrs are generated. The mold product determined as a good product by the detection part 82 or the inspection apparatus may be shipped as it is. It should be noted that the detection part 82 may determine the quality of the mold product based on a degree of change in the detection value of the nozzle contact force.

### (Variation of Injection Molding Machine)

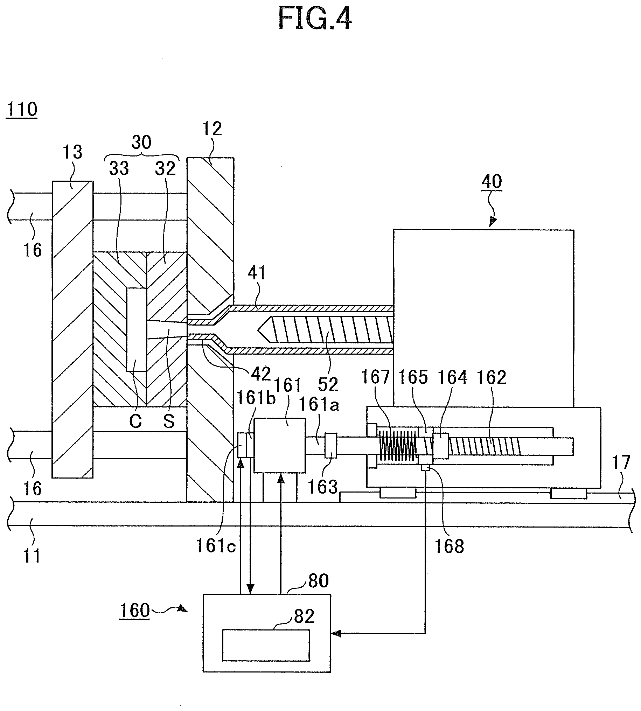

FIG. 4 is a diagram illustrating an outline of an injection molding machine according to a variation. The injection molding machine 110 illustrated in FIG. 4 differs from the injection molding machine illustrated in FIG. 1 in only an injection apparatus moving apparatus. Hereinafter, the difference is explained.

The injection apparatus moving apparatus 160 is equipped with a brake equipped drive motor 161. The drive motor 161 may be a servo motor, and may have an encoder part 161b to detect a number of revolutions of an output shaft 161a. The output shaft 161a of the drive motor 161 is coupled to a ball-screw shaft 162 via a coupling 163. a ball-screw nut 164, which is engaged with the ball-screw shaft 162, is fixed to a piston 165. The piston 165 is provided movably forward and rearward within a spring cylinder 166. The spring cylinder 166 is fixed to an injection apparatus 40. A spring 167 is provided in a chamber in front of the piston 165 in the spring cylinder 166. Then, a position sensor 168 is arranged to face the piston 165. An amount of deformation of the spring 167 is detected by detecting the position of the piston 165 by the position sensor 168, and the detected amount of deformation is input to the control apparatus 80.

With the injection-apparatus moving apparatus 160, the ball-screw nut 164 and the piston 165 are moved forward from a rearmost position by driving the drive motor 161 to rotate the ball-screw shaft 162 so as to cause the injection apparatus 40 to move forward. Then, the injection apparatus 40 reaches a nozzle contact position and the nozzle 42 is brought into contact with the stationary mold 32. Then, the drive motor 161 is driven further to move the piston 165 forward in the spring cylinder 166 against an urging force of the spring 167. Thereby, the spring 167 is deformed, and the nozzle contact force to press the nozzle 42 against the stationary mold 32 rises. The nozzle contact force can be detected by detecting an amount of deformation of the spring 167. Then, when the amount of deformation of the spring 167 reaches a set value and the nozzle contact force reaches a set value, the drive motor is stopped. At this time, the brake (for example, an electromagnetic brake) 161c provided to the drive motor 161 restricts the rotation of the drive motor 161 so that the nozzle contact force is maintained at the set value. It should be noted that when the drive motor 161 is driven to rotate, the brake 161c permits the output shaft 161a to rotate.

With the injection apparatus moving apparatus 160, as illustrated in FIG. 3- (b) and similar to the injection apparatus moving apparatus illustrated in FIG. 1, when the nozzle contact force at a start time of the injection/pressure-holding process is lower than the maximum reaction force during the injection/pressure holding process, the nozzle 42 is slightly thrust back during the injection/pressure-holding process, and, thereby, the injection apparatus 40 moves rearward. At this time, the front chamber of the spring cylinder 166 is reduced, and an amount of deformation of the spring 167 arranged in the front chamber becomes large, which causes the nozzle contact force to rise. The change in the nozzle contact force indicates that the nozzle contact force is too high, that is, the maximum injection pressure is too high, which represents that the resin pressure in the mold apparatus 30 (the spool S, the cavity space C, etc.) is too high. Accordingly, similar to the above-mentioned embodiment, the resin pressure in the mold apparatus 30 can be detected by detecting presence or absence of a change in the nozzle contact force due to rising of the injection pressure, which permits acquisition of information useful for an injection molding.

Although the embodiment of the present invention and variation thereof have been explained, the present invention is not limited to the above-mentioned embodiments, and various variations and replacements may be made within a scope of the present invention recited in the claims.

For example, although a change in the nozzle contact force due to rising of the injection pressure is detected after an operation to maintain the nozzle contact force at the set value in a state where the drive source (the pump motor 76, the drive motor 161) of the injection apparatus moving apparatus 60 or 160 is stopped, the present invention is not limited to such a structure. in order to maintain the nozzle contact force at the set value, a change in the nozzle contact force duce to rising of the injection pressure may be detected in a state where the drive source (the pump motor 76, the drive motor 161) of the injection apparatus moving apparatus 60 or 160 is driven. Also in this case, it is possible to detect presence or absence of a change in the nozzle contact force due to rising of the injection pressure according to a delay in response.

Moreover, although the brake equipped drive motor 161 is used to maintain the nozzle contact force at the set value in a state where the drive motor 161 is stopped in the injection apparatus moving apparatus 160 according to the above-mentioned variation, for example, a brake apparatus to restrict rotation of the ball-screw shaft 162 may be provided separate from the drive motor 161.

Moreover, although the detection part 82 of the above-mentioned embodiment is provided in the control apparatus 80 which controls the injection apparatus 40 and the injection apparatus moving apparatus 60 or 160, the detection part 82 may be provided in an exclusive microcomputer or the like, or a judgment of whether to reduce the nozzle contact force may be input to the control apparatus 80.

## Claims

1. An injection molding machine (10) comprising:
a) an injection apparatus (40) including a nozzle (42) to inject a resin to fill the resin into a mold (30, C, 32, 33);
b) a moving mechanism (60) configured to press said nozzle (42) against said mold (30, C, 32, 33); and
c) a detection part (82) configured to detect a magnitude relation between a nozzle contact force by the moving mechanism (60) and a reaction force of a pressure of the resin injected by the injection apparatus (40),
the moving mechanism (60) including a hydraulic cylinder (62), a flow path (68) to supply an operating fluid to generate the nozzle contact force to the hydraulic cylinder (62), an open/close valve (61) to open and close the flow path (68), and a pressure sensor (75) to detect a hydraulic pressure of the operating fluid between the hydraulic cylinder (62) and the open/close valve (61),
wherein
the detection part (82) is configured to detect the magnitude relation between the nozzle contact force and the reaction force based on a result of detection of the pressure sensor (75) under a condition where the open/close valve (61) close the flow path (68).

2. The injection molding machine as claimed in claim 1, wherein said detection part (82) is configured to determine, based on a result of detection of the magnitude relation in a molding cycle, whether to reduce a set value of said nozzle contact force for a subsequent molding cycle.

3. The injection molding machine as claimed in claim 1 or 2, wherein said detection part (82) is configured to determine, based on a result of detection of the magnitude relation in a molding cycle, whether to increase a set value of said nozzle contact force for a subsequent molding cycle.

4. The injection molding machine as claimed in any one of claims 1-3, wherein said detection part (82) is configured to determine, based on a result of detection of the magnitude relation in a molding cycle, whether to reduce a maximum injection pressure for a subsequent molding cycle.

5. The injection molding machine as claimed in any one of claims 1-4, wherein said detection part (82) is configured to determine, based on a result of detection of the magnitude relation in a molding cycle, whether a mold product of the molding cycle is good or not good.

6. An injection molding method comprising:
a) moving an injection apparatus (40) to press a nozzle (42) against a mold (30, C, 32, 33);
b) injecting a resin from said nozzle (42) into said mold (30, C, 32, 33) ; and
c) detecting a magnitude relation between a nozzle contact force by the moving mechanism (60) and a reaction force of a pressure of the resin injected by the injection apparatus (40),
wherein
said detecting includes detecting the magnitude relation between the nozzle contact force and the reaction force based on a result of detection of a pressure sensor (75), detecting a hydraulic pressure of an operating fluid between a hydraulic cylinder (62) and an open/close valve (61), under condition where the open/close valve (61) closes a flow path (68) supplying the operating fluid to generate the nozzle contact force to the hydraulic cylinder (62).

7. The injection molding method as claimed in claim 6, wherein said detecting includes determining, based on a result of the detecting the magnitude relation in a molding cycle, whether to reduce a set value of said nozzle contact force for a subsequent molding cycle.

8. The injection molding method as claimed in claim 6 or 7, wherein said detecting includes determining, based on a result of the detecting the magnitude relation in a molding cycle, whether to increase a set value of said nozzle contact force for a subsequent molding cycle.

9. The injection molding method as claimed in any one of claims 6-8, wherein said detecting includes determining, based on a result of the detecting the magnitude relation in a molding cycle, whether to reduce a maximum injection pressure for a subsequent molding cycle.

10. The injection molding method as claimed in any one of claims 6-9, wherein said detecting includes determining, based on a result of the detecting the magnitude relation in a molding cycle, whether a mold product of the molding cycle is good or not good.

## Patentansprüche

1. Spritzgießmaschine (10), umfassend:
a) eine Spritzeinrichtung (40), die eine Düse (42) beinhaltet, um ein Harz einzuspritzen, um das Harz in eine Gießform (30, C, 32, 33) zu füllen;
b) einen Bewegungsmechanismus (60), der konfiguriert ist, die Düse (42) gegen die Gießform (30, C, 32, 33) zu pressen; und
c) einen Erfassungsteil (82), der konfiguriert ist, eine Magnitudenbeziehung zwischen einer Düsenkontaktkraft durch den Bewegungsmechanismus (60) und einer Reaktionskraft eines Drucks des Harzes, das durch die Spritzeinrichtung (40) eingespritzt wird, zu erfassen,
wobei der Bewegungsmechanismus (60) einen Hydraulikzylinder (62), einen Strömungspfad (68), um ein Betriebsfluid, um die Düsenkontaktkraft zu erzeugen, an den Hydraulikzylinder (62) zuzuführen, ein Öffnungs-/Schließventil (61), um den Strömungspfad (68) zu öffnen und zu schließen, und einen Drucksensor (75), um einen Hydraulikdruck des Betriebsfluides zwischen dem Hydraulikzylinder (62) und dem Öffnungs-/Schließventil (61) zu erfassen, beinhaltet,
wobei
der Erfassungsteil (82) konfiguriert ist, die Magnitudenbeziehung zwischen der Düsenkontaktkraft und der Reaktionskraft basierend auf einem Erfassungsergebnis des Drucksensors (75) unter einer Bedingung zu erfassen, wo das Öffnungs-/Schließventil (61) den Strömungspfad (68) schließt.

2. Spritzgießmaschine nach Anspruch 1, wobei der Erfassungsteil (82) konfiguriert ist, basierend auf einem Erfassungsergebnis der Magnitudenbeziehung in einem Gießzyklus zu bestimmen, ob ein Einstellwert der Düsenkontaktkraft für einen nachfolgenden Gießzyklus zu verringern ist.

3. Spritzgießmaschine nach Anspruch 1 oder 2, wobei der Erfassungsteil (82) konfiguriert ist, basierend auf einem Erfassungsergebnis der Magnitudenbeziehung in einem Gießzyklus zu bestimmen, ob ein Einstellwert der Düsenkontaktkraft für einen nachfolgenden Gießzyklus zu erhöhen ist.

4. Spritzgießmaschine nach einem der Ansprüche 1-3, wobei der Erfassungsteil (82) konfiguriert ist, basierend auf einem Erfassungsergebnis der Magnitudenbeziehung in einem Gießzyklus zu bestimmen, ob ein maximaler Spritzdruck für einen nachfolgenden Gießzyklus zu verringern ist.

5. Spritzgießmaschine nach einem der Ansprüche 1-4, wobei der Erfassungsteil (82) konfiguriert ist, basierend auf einem Erfassungsergebnis der Magnitudenbeziehung in einem Gießzyklus zu bestimmen, ob ein Gießprodukt des Gießzyklus gut oder nicht gut ist.

6. Spritzgießverfahren, umfassend:
a) Bewegen einer Spritzeinrichtung (40), um eine Düse (42) gegen eine Gießform (30, C, 32, 33) zu pressen;
b) Spritzen eines Harzes von der Düse (42) in die Gießform (30, C, 32, 33); und
c) Erfassen einer Magnitudenbeziehung zwischen einer Düsenkontaktkraft durch den Bewegungsmechanismus (60) und einer Reaktionskraft eines Drucks des Harzes, das durch die Spritzeinrichtung (40) gespritzt wird,
wobei
das Erfassen ein Erfassen der Magnitudenbeziehung zwischen der Düsenkontaktkraft und der Reaktionskraft basierend auf einem Erfassungsergebnis eines Drucksensors (75) beinhaltet, der einen Hydraulikdruck eines Betriebsfluides zwischen einem Hydraulikzylinder (62) und einem Öffnungs-/Schließventil (61) unter einer Bedingung erfasst, wo das Öffnungs-/Schließventil (61) einen Strömungspfad (68), der das Betriebsfluid zuführt, um die Düsenkontaktkraft zu erzeugen, zum Hydraulikzylinder (62) schließt.

7. Spritzgießverfahren nach Anspruch 6, wobei das Erfassen Bestimmen beinhaltet, basierend auf einem Ergebnis vom Erfassen der Magnitudenbeziehung in einem Gießzyklus, ob ein Einstellwert der Düsenkontaktkraft für einen nachfolgenden Gießzyklus zu verringern ist.

8. Spritzgießverfahren nach Anspruch 6 oder 7, wobei das Erfassen Bestimmen beinhaltet, basierend auf einem Ergebnis des Erfassens der Magnitudenbeziehung in einem Gießzyklus, ob ein Einstellwert der Düsenkontaktkraft für einen nachfolgenden Gießzyklus zu erhöhen ist.

9. Spritzgießverfahren nach einem der Ansprüche 6-8, wobei das Erfassen Bestimmen beinhaltet, basierend auf einem Ergebnis des Erfassens der Magnitudenbeziehung in einem Gießzyklus, ob ein maximaler Spritzdruck für einen nachfolgenden Gießzyklus zu verringern ist.

10. Spritzgießverfahren nach einem der Ansprüche 6-9, wobei das Erfassen Bestimmen beinhaltet, basierend auf einem Ergebnis des Erfassens der Magnitudenbeziehung in einem Gießzyklus, ob ein Gießprodukt des Gießzyklus gut oder nicht gut ist.

## Revendications

1. Machine de moulage par injection (10) comprenant :
a) un appareil d'injection (40) incluant une buse (42) servant à injecter une résine pour verser la résine dans un moule (30, C, 32, 33) ;
b) un mécanisme mobile (60) configuré pour presser ladite buse (42) contre ledit moule (30, C, 32, 33) ; et
c) une partie de détection (82) configurée pour détecter une relation d'amplitude entre une force de contact de buse par le mécanisme mobile (60) et une force de réaction d'une pression de la résine injectée par l'appareil d'injection (40),
le mécanisme mobile (60) incluant un cylindre hydraulique (62), un trajet de flux (68) pour fournir un fluide opérationnel afin de générer la force de contact de buse au cylindre hydraulique (62), une valve ouverte/fermée (61) pour ouvrir et fermer le trajet de flux (68), et un capteur de pression (75) pour détecter une pression hydraulique du fluide opérationnel entre le cylindre hydraulique (62) et la valve ouverte/fermée (61),
dans laquelle
la partie de détection (82) est configurée pour détecter la relation d'amplitude entre la force de contact de buse et la force de réaction sur la base d'un résultat de détection du capteur de pression (75) dans un état dans lequel la valve ouverte/fermée (61) ferme le trajet de flux (68).

2. Machine de moulage par injection selon la revendication 1, dans laquelle ladite partie de détection (82) est configurée pour déterminer, sur la base d'un résultat de détection de la relation d'amplitude dans un cycle de moulage, s'il faut réduire une valeur de consigne de ladite force de contact de buse pour un cycle de moulage ultérieur.

3. Machine de moulage par injection selon la revendication 1 ou 2, dans laquelle ladite partie de détection (82) est configurée pour déterminer, sur la base d'un résultat de détection de la relation d'amplitude dans un cycle de moulage, s'il faut augmenter une valeur de consigne de ladite force de contact de buse pour un cycle de moulage ultérieur.

4. Machine de moulage par injection selon l'une quelconque des revendications 1 à 3, dans laquelle ladite partie de détection (82) est configurée pour déterminer, sur la base d'un résultat de détection de la relation d'amplitude dans un cycle de moulage, s'il faut réduire une pression d'injection maximum pour un cycle de moulage ultérieur.

5. Machine de moulage par injection selon l'une quelconque des revendications 1 à 4, dans laquelle ladite partie de détection (82) est configurée pour déterminer, sur la base d'un résultat de détection de la relation d'amplitude dans un cycle de moulage, si un produit moulé du cycle de moulage est bon ou ne l'est pas.

6. Procédé de moulage par injection comprenant :
a) le déplacement d'un appareil d'injection (40) pour presser une buse (42) contre un moule (30, C, 32, 33) ;
b) l'injection d'une résine depuis ladite buse (42) dans ledit moule (30, C, 32, 33) ; et
c) la détection d'une relation d'amplitude entre une force de contact de buse par le mécanisme mobile (60) et une force de réaction d'une pression de la résine injectée par l'appareil d'injection (40),
dans lequel
ladite détection inclut la détection de la relation d'amplitude entre la force de contact de buse et la force de réaction sur la base d'un résultat de détection d'un capteur de pression (75), la détection d'une pression hydraulique d'un fluide opérationnel entre un cylindre hydraulique (62) et une valve ouverte/fermée (61), dans un état dans lequel la valve ouverte/fermée (61) ferme un trajet de flux (68) fournissant le fluide opérationnel pour générer la force de contact de buse au cylindre hydraulique (62).

7. Procédé de moulage par injection selon la revendication 6, dans lequel ladite détection inclut la détermination, sur la base d'un résultat de la détection de la relation d'amplitude dans un cycle de moulage, s'il faut réduire une valeur de consigne de ladite force de contact de buse pour un cycle de moulage ultérieur.

8. Procédé de moulage par injection selon la revendication 6 ou 7, dans lequel ladite détection inclut la détermination, sur la base d'un résultat de la détection de la relation d'amplitude dans un cycle de moulage, s'il faut augmenter une valeur de consigne de ladite force de contact de buse pour un cycle de moulage ultérieur.

9. Procédé de moulage par injection selon l'une quelconque des revendications 6 à 8, dans lequel ladite détection inclut la détermination, sur la base d'un résultat de la détection de la relation d'amplitude dans un cycle de moulage, s'il faut réduire une pression d'injection maximum pour un cycle de moulage ultérieur.

10. Procédé de moulage par injection selon l'une quelconque des revendications 6 à 9, dans lequel ladite détection inclut la détermination, sur la base d'un résultat de la détection de la relation d'amplitude dans un cycle de moulage, si un produit moulé du cycle de moulage est bon ou ne l'est pas.
